# EUROPÄISCHE PATENTSCHRIFT

(11) **EP 2 365 860 B1**
(45) Veröffentlichungstag und Bekanntmachung des Hinweises auf die Patenterteilung: **09.10.2013**
(21) Anmeldenummer: 10743146.2
(22) Anmeldetag: 18.08.2010
(51) Int. Cl.: B01D 53/047, C01B 13/02, C01B 21/04

(54) **DRUCKWECHSELADSORPTIONSANLAGE UND DRUCKWECHSELADSORPTIONSVERFAHREN**
PRESSURE SWING ADSORPTION SYSTEM AND PRESSURE SWING ADSORPTION METHOD
INSTALLATION D'ADSORPTION PAR CHANGEMENT DE PRESSION ET PROCÉDÉ D'ADSORPTION PAR CHANGEMENT DE PRESSION

(30) Priorität: 01.09.2009 DE 102009039539
(43) Veröffentlichungstag der Anmeldung: 21.09.2011
(60) Teilanmeldung: 13169319.4
(73) Patentinhaber: Klein, Joachim, 46242 Bottrop (DE)
(72) Erfinder: Klein, Joachim, 46242 Bottrop (DE)
(74) Vertreter: Zech, Stefan Markus
(86) Internationale Anmeldenummer: PCT/EP2010/062002
(87) Internationale Veröffentlichungsnummer: WO 2011/026730

(56) Entgegenhaltungen:
- EP-A1- 1 872 845
- WO-A1-97/39821
- WO-A1-2005/025722
- JP-A- 5 192 526
- US-A- 4 452 612
- US-B1- 6 311 719
- US-B1- 6 475 265

## Beschreibung

Die Erfindung betrifft eine Druckwechseladsorptionsanlage zum Trennen eines ersten Gases eines Gasgemisches, insbesondere Stickstoff (N₂), von einem zweiten Gas, insbesondere Sauerstoff (O₂), umfassend mindestens eine Adsorberkammer zum Adsorbieren des zweiten Gases mit mindestens einem Adsorberkammereingang und mindestens einem Adsorberkammerausgang sowie ein Druckwechseladsorptionsverfahren.

Aus dem Stand der Technik sind Druckwechseladsorptionsanlagen bekannt, bei denen zwei im Wechsel betriebene Druckbehälter mit einem Kohlenstoffmolekularsieb befüllt sind. Eine Porenstruktur des Molekularsiebes ist so gestaltet, dass Sauerstoffmoleküle angelagert werden. Die größeren Moleküle - Stickstoff und Argon - passieren fast vollständig als Stickstoff-Produktgas das Kohlenstoffmolekularsieb. Umgebungsluft wird dabei auf etwa 8,5 bar verdichtet, getrocknet und in Filtern gereinigt. Die Luft gelangt danach in einen Luftpufferbehälter, der während eines zyklischen Betriebes einen nahezu konstanten Systemluftdruck gewährleistet. In einem ersten druckbeaufschlagten Adsorber wird Sauerstoff adsorbiert, während Stickstoff den Adsorber (Kohlenstoffmolekularsieb) verlässt. Während einer Beladung eines zweiten Adsorbers wird der erste durch Druckabsenkung auf Atmosphärendruck regeneriert und der Sauerstoff entweicht als Restgas. Eine speicherprogrammierbare Steuerung überwacht den gesamten Prozessablauf sowie die Einhaltung von Verfahrensparametern. Druckwechseladsorptionsanlagen können beispielsweise einen Leistungsbereich zwischen 1 und 1000 Nm³/h bei Rest-Sauerstoffgehalten von beispielsweise zwischen 0,01 Vol.-% und 5,0 Vol.-% abdecken.

Kohlenstoffmolekularsiebe (bzw. allgemein: Adsorber) sind das zentrale Element jeder Druckwechseladsorptionsanlage. Technischen Einsatz finden derartige Anlagen bei der Stickstoffgewinnung, der Biogasaufbereitung und der Wasserstoffreinigung.

Auch Sauerstoff kann durch Druckwechseladsorption gewonnen werden. Als Adsorptionsmittel dient dabei beispielsweise ein zeolitisches Molekularsieb, das bevorzugt Stickstoff adsorbiert. Stickstoff reichert sich im Porensystem des zeolitischen Molekularsiebes an, während Sauerstoff als Produktgas gewonnen wird.

Mit der Druckwechseladsorption lassen sich Sauerstoff-Reinheiten zwischen beispielsweise 90 Vol.-% und 95 Vol.-% Sauerstoff erzielen. Das Verfahren ist insbesondere wirtschaftlich für Sauerstoff-Bedarfsmengen bis ca. 100 nm³/h Erzeugungsleistung einsetzbar.

Druckwechseladsorptionsverfahren werden in P (Purification)- und R (Recovery)-Prozesse unterteilt. Bei den P-Prozessen werden die unerwünschten Komponenten zurückgehalten, während bei den R-Prozessen das Produkt zurückgehalten wird.

Die Druckwechseladsorption wird beispielsweise in der Lebensmittel- und Getränkeindustrie (N₂ für die Herstellung, Verpackung und Lagerung), in der chemischen Industrie (u. a. N₂-Inertisierung), in Raffinerien (Behandlung von Gasen, die reich an Wasserstoff und Kohlenwasserstoffen, wie CH₄, C₂H₆ etc. sind, für die Produktion von hochreinem Wasserstoff mit einem Gehalt von mehr als 99 %) eingesetzt. Weitere Anwendungsmöglichkeiten sind die Wasserstoffreinigung aus Dampfreformer-Synthesegas, die Wasserstoffrückgewinnung, Raffinerieabgas, in der Metallogie (N₂ zum Härten und Glühen), in der Biogasaufbereitung, Glasproduktion, Pharmaindustrie, Brandschutz, Elektroindustrie und in der Mineralwolle- und Emailleherstellung

EP 1 872 845 A1 beschreibt eine Adsorptionsanlage bzw. ein entsprechendes Verfahren zur Trennung von Gas aus einer Gasmischung. Dabei wird eine Gasleitung vorgesehen, um die Gasmischung zuzuführen und eine weitere Leitung, um ein Produktgas abzuführen, wobei ein übrig bleibendes Gas über diejenige Leitung abgeführt wird, über die die ursprüngliche Gasmischung zugeführt wird.

Die Druckschrift US 6,475,265 B1 beschreibt eine PSA-Vorrichtung (PSA = "pressure swing absorption"). Dabei sind Adsorptionskammern vorgesehen, die an ihrem unteren Ende an eine Leitung für ein übrig bleibendes Gas anschließbar sind und andererseits an weitere Adsorptionskammern.

Die WO 97/39821 A1 zeigt eine PSA-Vorrichtung, die ähnlich zu den Adsorptionsvorrichtungen gemäß EP 1 872 845 A1 und US 6,475,265 B1 ausgebildet ist. In der WO 2005/025722 A1 sorgt ein Ventil dafür, dass ein Produktgas über obere Ausgänge von Kammern über Leitungen in Richtung eines Ausgangs abgeführt werden kann. Übrig bleibendes Gas wird am gerade gegenüberliegenden Ende, nämlich am unteren Ende der Kammern über Leitungen abgeführt.

Die JP 5 192526 A zeigt eine Vorrichtung, bei der die Ableitung für das eine Gas am oberen Ende der Adsorptionskammer angeordnet ist und die Ableitung für ein anderes Gas am unteren Ende der Adsorptionskammer.

Die US 4,452,612 A beschreibt eine Vorrichtung, bei der ein rotierbarer Adsorber derart gedreht wird, dass Öffnungen von oberen Kammern alternierend als Ausgänge und Eingänge dienen.

Die US 6,311,719 B1 offenbart eine Adsorptionsanlage, bei der ein Produktende und ein Zuleitungsende vorgesehen sind. Übrig bleibendes Gas wird dabei über das Zuleitungsende 30 abgeführt.

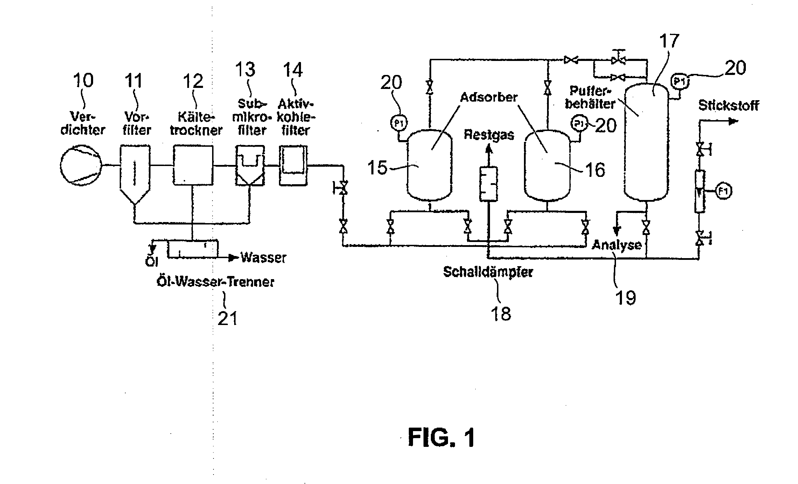

In Fig. 1 ist ein schematisches Diagramm einer Druckwechseladsorptionsanlage gemäß dem Stand der Technik gezeigt.

Problematisch bei den vorgenannten Druckwechseladsorptionsanlagen ist unter anderem, dass zur Realisierung kurzer Zykluszeiten die Ventile zur Steuerung der Adsorption und Desorption in kurzer Zeit, beispielsweise maximal 30 Sekunden öffnen und schließen. Hierbei treten oftmals technische Probleme bei der Umsetzung auf. Weiterhin ist die Reinheit des adsorptiv gewonnenen Sauerstoffs (oder Stickstoffs) begrenzt auf etwa 96 %.

Hintergrund ist hierbei, dass die Desorption einen endothermen Prozess darstellt, das heißt bei der Druckabsenkung sinkt die Temperatur im Adsorber. Hieraus folgt, dass isotherm betriebene Adsorber deutlich effektiver arbeiten als adiabatisch betriebene. Ein isothermer Betrieb kann im Allgemeinen dadurch erreicht werden, dass mit extrem kurzen Taktzeiten (beispielsweise von maximal wenigen Minuten) und vergleichsweise schnell schaltbaren Absperrmitteln gearbeitet wird. In diesem Zusammenhang üblicherweise verwendete Ventile sind allerdings aufgrund der hohen Volumenströme störanfällig und neigen zum Vereisen.

Es ist Aufgabe der vorliegenden Erfindung, eine Druckwechseladsorptionsanlage und ein Druckwechseladsorptionsverfahren vorzuschlagen, bei dem kurze Takt- und Schaltzeiten möglich sind und die insbesondere zuverlässig arbeiten.

Die Aufgabe wird durch eine Druckwechseladsorptionsanlage nach Anspruch 1 sowie ein Druckwechseladsorptionsverfahren nach Anspruch 22 gelöst.

Die Aufgabe wird insbesondere durch eine Druckwechseladsorptionsanlage zum Trennen eines ersten Gases eines Gasgemisches, insbesondere Stickstoff (N₂), von einem zweiten Gas, insbesondere Sauerstoff (O₂) umfassend mindestens zwei Adsorberkammern zum Adsorbieren des zweiten Gases, mit mindestens einen Adsorberkammereingang und mindestens einem Adsorberkammerausgang, wobei eine Verbindungswechseleinrichtung derart vorgesehen und ausgebildet ist, dass mindestens ein Adsorberkammerausgang alternierend sowohl mit einer ersten Gasableitung für eine Ableitung des ersten Gases als auch mit einer zweiten Gasableitung zu einer Ableitung des zweiten Gases verbindbar ist, gelöst, wobei mindestens eine zweite Gasableitung derart verschieblich/rotierbar ist, dass mindestens zwei Adsorberkammerausgänge an die zweite Gasableitung alternierend anschließbar sind.

Ein Kerngedanke der Erfindung ist darin zu sehen, dass es durch die Verbindungswechseleinrichtung ermöglicht wird, mindestens einen Adsorberkammerausgang wechselweise entweder mit der ersten oder der zweiten Gasableitung zu verbinden. Mit der vorgeschlagenen Druckwechseladsorptionsanlage ist eine derart schnelle Desorption möglich, dass diese isotherm und mit hoher Effizienz ablaufen kann. Hierbei kann auf die herkömmlichen Ventile, wie sie im Stand der Technik vorgesehen sind, verzichtet werden, was insgesamt zu einer verringerten Störanfälligkeit führt, insbesondere, da die Vereisungsproblematik im Zusammenhang mit herkömmlichen Ventilen vermieden werden kann. Weiterhin liegt ein Vorteil auch darin, dass mit der Druckwechseladsorptionsanlage stillstehende Dichtflächen realisiert werden können, mit denen sich wesentlich größere Druckdifferenzen verwirklichen lassen.

Es sind mindestens zwei Adsorptionskammern vorgesehen, die jeweils alternierend sowohl mit einer ersten/der ersten Gasableitung als auch mit einer zweiten/der zweiten Gasableitung verbindbar sind. Dadurch wird auf einfache Weise ein kontinuierliches Prozess gewährleistet, bei dem beispielsweise eine Adsorptionsphase in einer ersten Adsorptionskammer stattfinden kann, während eine Desorptionsphase in einer zweiten Adsorptionskammer stattfindet. Die beiden (allgemein: mehreren) Adsorptionskammern können dabei je einer ersten Gasableitung und/oder zweiten Gasableitung zugeordnet werden. Es können jedoch auch alternativ separate Gasableitungen vorgesehen sein.

In einer bevorzugten Ausführungsform sind mindestens zwei oder vorzugsweise drei, insbesondere alle Adsorptionskammern mit derselben ersten Gasableitung und/oder zweiten Gasableitung verbindbar. Solche Ausgestaltungen sind in konstruktiver Hinsicht besonders einfach und ermöglichen einen vergleichweise reibungslosen und kontinuierlichen Ablauf der Gastrennung.

Vorzugsweise ist mindestens ein Adsorberkammerausgang mit einer ersten und/oder zweiten Gasableitung unmittelbar verbindbar. Durch die unmittelbare Verbindung kann Material das ansonsten für Verbindungsleistungen notwendig wäre, eingespart werden. Auch ein Totraum beim Umkoppeln bzw. Ändern der Verbindung wird zumindest reduziert.

Vorzugsweise ist mindestens eine erste Gasableitung mit einem höheren Druck von beispielsweise 5 bar bis 15 bar, insbesondere 7 bar bis 10 bar, vorzugsweise etwa 8 bar und mindestens eine zweite Gasableitung mit einem im Vergleich zum höheren Druck niedrigeren Druck von beispielsweise 0,1 bar bis 3 bar, insbesondere 0,5 bar bis 2 bar, vorzugsweise etwa 1 bar, beaufschlagbar/beaufschlagt. Die Steuerung der Druckbeaufschlagung kann dabei über eine dafür vorgesehene Steuereinheit erfolgen, die vorzugsweise über die Auswertung von Messungen von Messeinrichtungen die Druckbeaufschlagung steuert.

Vorzugsweise sind mindestens drei Adsorberkammern vorgesehen, wobei die Verbindungswechseleinrichtung derart ausgebildet ist, dass nur eine der Adsorberkammern mit der zweiten Gasableitung verbindbar bzw. verbunden ist. Gemäß einem allgemeineren Gedanken ist die Verbindungswechseleinrichtung derart ausgebildet, dass n Adsorberausgänge mit einer ersten Gasleitung verbindbar bzw. verbunden sind und m Adsorberausgänge mit einer zweiten Gasleitung verbindbar bzw. verbunden sind und das Verhältnis n/m mindestens 1,5, vorzugsweise mindestens 2, weiter vorzugsweise mindestens 5, insbesondere mindestens 10 beträgt. Eine derartige Maßnahme steigert die Effizienz der Druckwechseladsorptionsanlage, da zu einer Zeit, während der eine vergleichsweise große Zahl von Adsorberkammern die relativ zeitaufwändige Adsorptionsphase durchläuft, eine vergleichsweise geringere Zahl von Adsorberkammern die im Allgemeinen schneller ablaufende Desorptionsphase durchläuft.

In einer bevorzugten Ausbildung sind mindestens zwei, insbesondere alle Adsorberkammereingänge mit einer gemeinsamen Sammelkammer fluidverbunden. Dabei können die Adsorberkammereingänge direkt bzw. unmittelbar an die Sammelkammer anschließen, so dass aufwändige Leitungen vermieden werden können. Durch das Bereitstellen der gemeinsamen Sammelkammer wird es ermöglicht, für alle Adsorberkammern einheitliche Verhältnisse hinsichtlich beispielsweise des Druckes und/oder der Temperatur des zu trennenden Gases bereitzustellen. In der Sammelkammer (oder auch außerhalb) können Messeinrichtungen zum Messen verschiedener Parameter, wie beispielsweise der Temperatur und/oder der Druckes, vorgesehen sein, wobei diese Messwerte an eine gesonderte Steuereinheit oder die zentrale Steuereinheit zur dortigen Verarbeitung weitergeleitet werden können.

Die Druckwechseladsorptionsanlage arbeitet effektiv, wenn mindestens ein Adsorberkammereingang mit einem Druck von 5 bar bis 15 bar, insbesondere 8 bar bis 12 bar, beispielsweise 9 bar bis 10 bar beaufschlagbar/beaufschlagt ist. Prinzipiell können mehrere Adsorberkammereingänge mit verschiedenen Drücken beaufschlagt werden, vorzugsweise werden jedoch alle mit demselben Druck beaufschlagt.

In einer konkreten Ausführungsform verläuft die zweite Gasableitung zumindest teilweise innerhalb der ersten Gasableitung. Dadurch wird zunächst vorteilhafterweise Raum und Material eingespart. Weiterhin kann eine derartige Maßnahme die Sicherheit der Anlage erhöhen, da bei einer Leckage der zweiten Gasableitung zwar möglicherweise die Reinheit des zu trennenden Gases nachlässt, jedoch ein Ausströmen des Gases in die Umgebung durch die erste Gasableitung (zumindest teilweise) verhindert wird. In diesem Zusammenhang kann die erste Gasableitung als zylindrischer Körper, insbesondere als Kreiszylinder ausgebildet sein.

Mindestens eine zweite Gasableitung ist derart verschieblich und/oder rotierbar, dass mindestens zwei Adsorberkammerausgänge an die zweite Gasableitung alternierend anschließbar sind. Dabei ist vorzugsweise die erste Gasableitung starr ausgebildet ist. Vorzugsweise ist genau eine zweite Gasableitung vorgesehen, die derart verschieblich und/oder rotierbar ist. Es können auch beispielsweise zwei bzw. eine Vielzahl von zweiten Gasableitungen vorliegen, die als Einheit verschieblich und/oder rotierbar sind oder auch jeweils separat verschieblich und/oder rotierbar sind. Im Ergebnis kann auf besonders einfache Weise ein Verbindungswechsel erfolgen, insbesondere wenn die zweite Gasableitung zumindest teilweise innerhalb der ersten Gasableitung verläuft. Bei einer derartigen Ausgestaltung führt nämlich eine Verbindung von Adsorberkammerausgang und zweiter Gasableitung ohne weitere Maßnahmen ergreifen zu müssen dazu, dass die Verbindung zwischen Adsorberkammerausgang und erster Gasableitung getrennt wird.

In einer konkreten Weiterbildung weist die zweite Gasableitung ein Drehgelenk und/oder eine Schwenkvorrichtung, insbesondere einen Schwenkbogen auf. Durch eine Drehung um das Drehgelenk kann dann die zweite Gasableitung gegenüber von verschiedenen Adsorberkammerausgängen positioniert werden, wobei ein Ankoppeln zumindest teilweise über die Schwenkvorrichtung möglich ist. Im Allgemeinen und insbesondere in diesem Zusammenhang ist es vorteilhaft, wenn mehrere Adsorberkammerausgänge, insbesondere alle Adsorberkammerausgänge den gleichen Radialabstand zu einer Drehachse, die durch das Drehgelenk definiert wird, aufweisen. Die mehreren Adsorberkammerausgänge können dabei revolvertrommelartig angeordnet sein und beispielsweise auch zueinander einen jeweils konstanten Abstand aufweisen. Bei einer Rotation der zweiten Gasableitung um 360° würden dann sukzessive die einzelnen Adsorberkammerausgänge verbunden werden.

Vorzugsweise ist mindestens ein Adsorberkammerausgang baulich in mindestens zwei Einzeladsorberkammerausgänge unterteilt, wobei ein erster Einzeladsorberkammerausgang zum Abschluss an die erste Gasableitung, und ein zweiter Einzeladsorberkammerausgang zum Anschluss an die zweite Gasableitung ausgebildet ist. Alternativ kann als separate Komponente auch an mindestens einem Adsorberkammerausgang ein Verteiler, insbesondere mit einem Drei-Wege-Ventil angeschlossen sein, wobei jeweils ein Verteilerausgang zum Anschluss an die erste Gasableitung und einer zweiter Verteilerausgang zum Anschluss an die zweite Gasableitung ausgebildet sein kann. Im Ergebnis ist es möglich, dass die entsprechenden Adsorberkammerausgänge einzeln verschließbar sind, was die Variabilität der Druckwechseladsorptionsanlage erhöht.

Vorzugsweise ist der erste und/oder zweite Adsorberkammerausgang durch separate Verschlusselemente oder alternativ durch ein einzelnes Verschlusselement verschließbar. Wenn nur ein einzelnes Verschlusselement vorgesehen ist, kann Material eingespart werden.

In einer konkreten Ausführungsform ist/sind mindestens eine Adsorberkammer, insbesondere mindestens zwei Adsorberkammern zumindest teilweise in einer gemeinsamen Kammer untergebracht, die vorzugsweise zumindest einen Teil der zweiten Gasableitung ausbildet. Eine derartige Ausbildung führt zu einer Material- und Platzeinsparung. Wenn die Adsorberkammer von einer weiteren Kammer umgeben ist, wird auch die Sicherheit verbessert, da eventuelle Leckagen nicht (oder zumindest nur in reduziertem Maße) zu einer Kontaminierung bzw. zu einer nur reduzierten Kontaminierung der die Druckwechseladsorptionsanlage umgebenden Luft führt.

Vorzugsweise umfasst die Verbindungswechseleinrichtung mindestens ein Hohlkörperelement, das derart rotatorisch und/oder translatorisch verschieblich ist, dass infolge der Rotation und/oder Translation ein Hohlkörperelementausgang alternierend zu der ersten und zweiten Gasableitung verbindbar ist. Weiter vorzugsweise ist das Hohlkörperelement insbesondere translatorisch verschieblich und als Hohlzylinder ausgebildet, der vorzugsweise im Bereich seiner Mantelfläche mindestens eine Öffnung aufweist. Die Verschiebung kann dabei vorzugsweise derart erfolgen, dass die mindestens eine Öffnung in der Mantelfläche in Abhängigkeit von ihrer translatorischen Position entweder mit mindestens einer ersten oder mit mindestens einer zweiten Ableitung verbunden ist. Ein derartiger Verbindungswechsel ist konstruktiv besonders einfach und wenig störanfällig. Alternativ kann mindestens ein Verschlusselement eines Adsorberkammereingangs und/oder Adsorberkammerausgangs zumindest bereichsweise konisch ausgebildet sein. Mindestens ein Adsorberkammereingang kann als Hohlkörperelement, insbesondere Hohlzylinder ausgebildet sein.

In einer konkreten Ausführungsform ist mindestens eine Adsorberkammer translatorisch und/oder rotatorisch verschieblich gelagert derart, dass infolge der Verschiebung ein zugeordneter Adsorberkammerausgang mit der ersten und zweiten Gasableitung alternierend verbindbar ist. Bei einer derartigen Ausführungsform kann gänzlich auf ein separates Teil zum Verbindungswechsel verzichtet werden, was ebenfalls Platz und Kosten einspart.

Vorzugsweise ist eine Verschiebung der Verschlusselemente und/oder der Adsorberkammer(n) pneumatisch, insbesondere mittels eines dafür vorgesehenen Pneumatikzylinders steuerbar. Eine derartige Steuerung ist einfach und wenig störanfällig.

Weiter vorzugsweise ist eine Gasabzweigung derart vorgesehen, dass ein Steuergas zur Steuerung der Verschiebung der Verschlusselemente von dem zu trennenden Strom des Gasgemisches abzweigbar ist. Dadurch wird ein separates Bereitstellen eines Steuermediums überflüssig. Auch können Leitungslängen reduziert werden. Im Allgemeinen führt auch eine derartige Maßnahme zu Kostensenkung und einer kompakten Bauweise der Druckwechseladsorptionsanlage.

Die oben genannte Aufgabe wird unabhängig insbesondere durch ein Druckwechseladsorptionsverfahren zum Trennen eines ersten Gases eines Gasgemisches, insbesondere Stickstoff (N₂), von einem zweiten Gas, insbesondere Sauerstoff (O₂), gelöst, wobei das Verfahren die Schritte umfasst:
a) Einleiten des Gasgemisches in eine Adsorberkammer über einen Adsorberkammereingang unter erhöhtem Druck derart, dass das zweite Gas zumindest teilweise adsorbiert und
   Verbinden eines Adsorberkammerausgangs mit einer ersten Gasableitung derart, dass der nicht adsorbierte Teil des Gasgemisches über die erste Gasableitung abströmt und
b) Trennen des Adsorberkammerausgangs von der ersten Gasableitung und Verbinden des Adsorberkammerausgangs mit einer zweiten Gasableitung und Reduktion des Druckes in der Adsorberkammer derart, dass adsorbiertes Gas desorbiert und über die zweite Gasableitung abströmt wobei mindestens zwei Adsorberkammerausgänge an die zweite Gasableitung alternierend anschließbar sind. Das Verfahren weist im Prinzip dieselben Vorteile auf, wie die zuvor beschriebene Druckwechseladsorptionsanlage.

Vorzugsweise kann im Schritt a) und/oder b) der am Adsorberkammereingang anliegende Druck auf 5 bar bis 15 bar, vorzugsweise 8 bar bis 12 bar, insbesondere 9 bar bis 11 bar, eingestellt werden. Weiter vorzugsweise kann der Druck am Adsorberkammerausgang im Schritt a) auf 4 bar bis 10 bar, insbesondere 5 bar bis 8 bar, vorzugsweise 6 bar bis 7 bar, eingestellt werden. Weiter vorzugsweise wird der Druck am Adsorberkammerausgang im Schritt b) auf 0,1 bar bis 2 bar, insbesondere etwa 1 bar, eingestellt.

Vorzugsweise beträgt ein Verhältnis von einer Adsorptionszeit im Schritt a) zu einer Desorptionszeit im Schritt b) etwa mindestens 1,5, vorzugsweise mindestens 2, weiter vorzugsweise mindestens 5, insbesondere mindestens 10.

In einer bevorzugten Ausführungsform wird zu einem beliebigen Zeitpunkt ein Adsorptionszyklus für eine Anzahl n von Adsorptionskammern durchgeführt und zugleich ein Desorptionszyklus für eine Anzahl m, insbesondere m=1, durchgeführt, wobei ein Verhältnis n/m mindestens 1,5, vorzugsweise mindestens 2, insbesondere mindestens 10 beträgt.

Ein Verbindungswechsel wird derart durchgeführt, dass mindestens eine zweite Gasableitung derart verschoben und/oder rotiert wird, dass mindestens zwei Adsorberkammerausgänge an die zweite Gasableitung alternierend angeschlossen werden.

Vorzugsweise wird mindestens eine Adsorberkammer translatorisch und/oder rotatorisch derart verschoben, dass infolge der Verschiebung ein Adsorberkammerausgang mit der ersten und zweiten Gasableitung alternierend verbunden wird.

Eine Verschiebung der Verschlusselemente und/oder der Adsorberkammer wird vorzugsweise pneumatisch, insbesondere mittels eines dafür vorgesehenen Pneumatikzylinders durchgeführt. Es ist vorteilhaft, wenn ein Steuergas zur Steuerung der Verschiebung von dem zu trennenden Gasgemisch abgezweigt wird.

Weitere Ausführungsformen ergeben sich aus den Unteransprüchen.

Nachfolgend wird die Erfindung auch hinsichtlich weiterer Merkmale und Vorteile anhand von Ausführungsbeispielen beschrieben, die anhand der Abbildungen näher erläutert werden.

### Hierbei zeigen:

- Fig. 1: eine Druckwechseladsorptionsanlage gemäß dem Stand der Technik;
- Fig. 2: eine schematische Darstellung eines Ausschnittes einer ersten Ausführungsform der erfindungsgemäßen Druckwechseladsorptionsanlage;
- Fig. 3: eine schematische Darstellung eines Ausschnittes einer zweiten Ausführungsform der Druckwechseladsorptionsanlage;
- Fig. 4: eine schematische Darstellung eines Ausschnittes einer dritten Ausführungsform der Druckwechseladsorptionsanlage in einer ersten Einstellung;
- Fig. 5: eine schematische Darstellung der Ausführungsform gemäß Fig. 4 in einer zweiten Einstellung;
- Fig. 6: eine schematische Darstellung eines Ausschnittes einer vierten Ausführungsform der Druckwechseladsorptionsanlage; und
- Fig. 7 bis 12: verschiedene Ausführungsformen von Verschlusselementen in schematischer Darstellung.

In der nachfolgenden Beschreibung werden für gleiche und gleichwirkende Teile dieselben Bezugsziffern verwendet.
Fig. 1 zeigt eine Druckwechseladsorptionsanlage gemäß dem Stand der Technik. Die erfindungsgemäße Druckwechseladsorptionsanlage kann prinzipiell der Druckwechseladsorptionsanlage gemäß dem Stand der Technik entsprechen, wobei konkrete Abweichungen dem Folgenden entnommen werden können. Insbesondere kann auch die erfindungsgemäße Druckwechseladsorptionsanlage einen Verdichter 10, einen Vorfilter 11, einen Kältetrockner 12, einen Submikrofilter 13, einen Aktivkohlefilter 14, eine erste Adsorberkammer 15, eine zweite Adsorberkammer 16, einen Pufferbehälter 17, einen Schalldämpfer 18, eine Analysevorrichtung 19, Druckmessvorrichtungen 20 und einen Öl-Wasser-Trenner 21 umfassen. Die Anordnung der Elemente mit den Bezugszeichen 10 bis 21 kann vorzugsweise auch bei der erfindungsgemäßen Druckwechseladsorptionsanlage wie in Fig. 1 dargestellt sein, wobei diesbezüglich die Anordnung von mindestens einem der Elemente 10 bis 21 auch von der in Fig. 1 gezeigten Anordnung abweichen kann. Unter der "Anordnung" kann insbesondere eine Anordnung in räumlicher Hinsicht und/oder eine Anordnung, die durch eine Fließrichtung des Gases definiert wird, verstanden werden. Ein Adsorber in den Adsorberkammern 15, 16 kann, wie weiter oben beschrieben, zusammengesetzt sein.

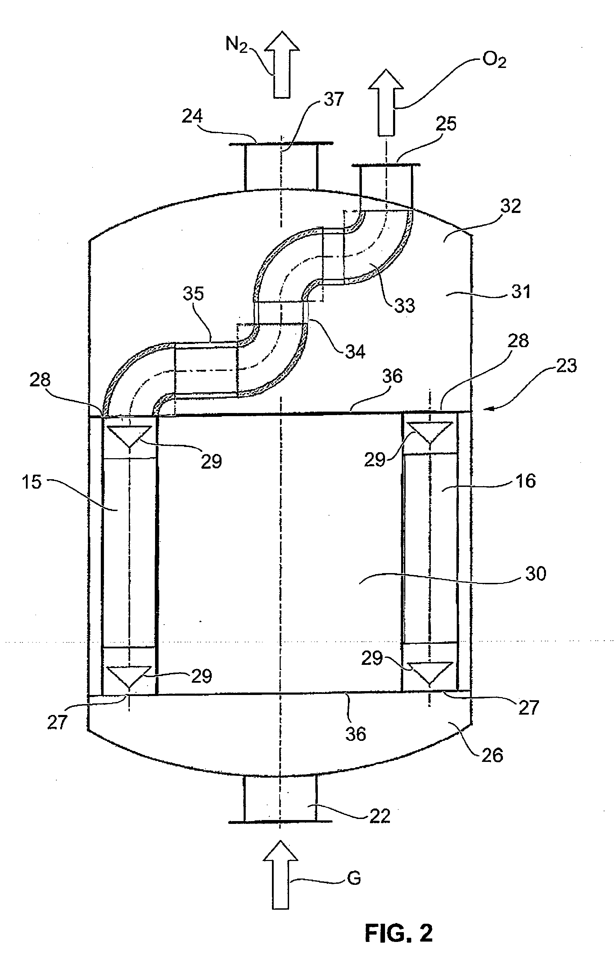

Fig. 2 zeigt eine schematische Darstellung eines Ausschnittes einer ersten Ausführungsform der Druckwechseladsorptionsanlage. Die Druckwechseladsorptionsanlage dient zum Heraustrennen von Stickstoff (N₂) aus einem Gas G. Das Gas G kann über einen Eingang 22 zu einer Trenneinheit 23 geführt werden. Aus einem Produktgasausgang 24 kann das Produktgas (beispielsweise N₂ oder O₂, im vorliegenden Fall konkret N₂) entnommen werden.

Über einen Restausgang 25 kann Restgas (im vorliegenden Fall konkret O₂) entströmen.

Der insbesondere zylindrisch ausgebildete Eingang 22 mündet in eine Eingangssammelkammer 26. Die Eingangssammelkammer 26 ist mit Adsorberkammereingängen 27 einer ersten Adsorberkammer 15 und einer zweiten Adsorberkammer 16 in Fluidverbindung. Die Adsorberkammern 15, 16 weisen weiterhin Adsorberkammerausgänge 28 auf. Die Adsorberkammereingänge 27 und - ausgänge 28 sind über Verschlusselemente 29 verschließbar.

Die Adsorberkammern 15, 16 sind innerhalb einer gemeinsamen Kammer 30 untergebracht, die durch Wände der insbesondere zylinderförmigen Trenneinheit 23 sowie die Eingangssammelkammer 26 und eine Produktgassammelkammer 31 begrenzt wird. Der Adsorberkammerausgang 28 der zweiten Adsorberkammer 16 mündet in die Produktgassammelkammer 31, welche zugleich einen Teil einer ersten Ableitung, konkret einer Produktgasableitung 32 ausbildet.

Der Ausgang 28 der ersten Adsorberkammer 15 mündet im vorliegenden Fall in eine zweite Ableitung, konkret eine Restgasableitung 33. Die Restgasableitung 33 umfasst ein Drehgelenk 34 und eine Schwenkvorrichtung 35. Das Drehgelenk 34 und die Schwenkvorrichtung 35 ermöglichen eine Verbindung von dem Adsorberkammerausgang 28 der ersten Adsorberkammer 15 oder dem Adsorberkammerausgang 28 der zweiten Adsorberkammer 16 mit der Restgasableitung 33. Aufgrund des Drehgelenks 34 und der Schwenkvorrichtung 35 können die Adsorberkammern 15, 16 mit einer totraumfreien Kupplung angefahren und mittels den adsorberkammerausgangsseitigen Verschlusselementen 29 "schlagartig" (in beispielsweise weniger als 1 min. oder 30s) desorbiert werden.

Die Trenneinheit 23 ist als Druckbehältergehäuse ausgebildet und oben und unten (wobei sich "oben" und "unten" lediglich auf die Orientierung in der Figur bezieht) mit abnehmbaren Klöpperböden oder Korbbogenböden versehen. Die Adsorberkammern 15, 16 werden eingangs- und ausgangsseitig von Rohrböden 36 aufgenommen.

Ein Verbindungswechsel kann stattfinden, indem durch Verschwenken der Verschwenkvorrichtung 35 und Entkopplung eines (im Detail nicht gezeigten) Entkopplungsmechanismus die Restgasableitung 33 von dem Adsorberkammerausgang 28 der ersten Adsorberkammer 15 abgelöst wird, woraufhin eine Drehung um eine Drehachse 37 bzw. das Drehgelenk 34 erfolgt (im vorliegenden Fall 180°) und entsprechend über ein Verschwenken der Verschwenkvorrichtung 35 die Restgasableitung 33 an den Adsorberkammerausgang 28 der zweiten Adsorberkammer angekoppelt wird (nicht in Figuren gezeigt).

Die Adsorberkammern 15, 16 weisen denselben Abstand zu der Drehachse 37 auf. Dieses Prinzip kann dahingehend verallgemeinert werden, dass eine Vielzahl von Adsorberkammern bereitgestellt wird, wobei die Adsorberkammern entlang eines Umfangs eines Kreises angeordnet werden, dessen Zentrum durch die Drehachse 37 definiert ist.

Der Druck beträgt am Eingang 22 beispielsweise etwa 8 bar bis 10 bar und am Produktgasausgang 24 etwa 7 bar. Am Restgasausgang 25 liegt Atmosphärendruck (etwa 1 bar) an.

Die Funktionsweise der Druckwechseladsorptionsanlage soll nun anhand der Vorgänge im Zusammenhang mit der zweiten Adsorptionskammer 16 näher erläutert werden. Zunächst strömt das Gas G kontinuierlich durch die Adsorberkammer 16, die als Molekularsieb bzw. Kohlenstoffmolekularsieb ausgestaltet sein kann. Die Porenstruktur des Molekularsiebes ist so gestaltet, dass Sauerstoffmoleküle angelagert werden. Die größeren Moleküle - Stickstoff und Argon - passieren fast vollständig als Produktgas das Molekularsieb. Die Adsorberkammer 16 befindet sich somit in einem Adsorptionsmodus. Bevor eine Adsorptionszone einen oberen Rand einer Adsorptionsschicht (nicht in den Figuren gezeigt) erreicht hat, schließen die Verschlusselemente 29 die Adsorberkammer 16 eingangs- und ausgangsseitig ab. Nach dem Verschließen der Verschlusselemente 29 bewegt sich die Restgasableitung 33 (die konkret als Desorptionsarm ausgebildet ist) auf den Adsorberkammerausgang 28 zu und koppelt nahezu totraumfrei an das ausgangsseitige Verschlusselement 29 an. Darauf hin öffnet das ausgangsseitige Verschlusselement 29 und aufgrund der Druckabsenkung erfolgt eine Desorption. Die Adsorberkammer 16 befindet sich dann in einem Desorptionsmodus (wie nicht in Fig. 2 gezeigt).

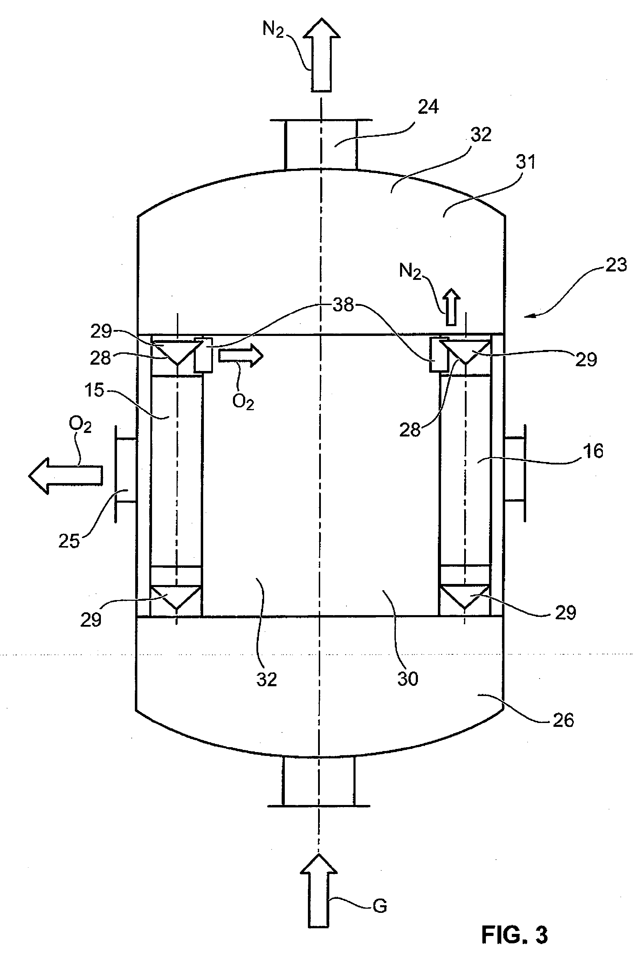

Fig. 3 zeigt eine schematische Darstellung eines Ausschnittes einer zweiten Ausführungsform der erfindungsgemäßen Druckwechseladsorptionsanlage. Die zweite Adsorberkammer 16 befindet sich im Adsorptionsmodus, wohingegen sich die erste Adsorberkammer 15 im Desorptionsmodus befindet. Analog zur Ausführungsform gemäß Fig. 2 werden die Adsorberkammern 15, 16 durch Verschlusselemente 29 verschlossen (bzw. sind verschließbar), wobei ein Verschluss bzw. eine Öffnung gegenüber der Eingangssammelkammer 26 und der Produktgassammelkammer 31 erfolgen kann. Zusätzlich sind noch Verschlusselemente 38 ausgangsseitig an den Adsorberkammern 15, 16 vorgesehen. Die Verschlusselemente 38 ermöglichen ein Verschließen bzw. Öffnen einer Verbindung zwischen Adsorberkammerausgängen 28 und der gemeinsamen Kammer 30. Die gemeinsame Kammer 30 bildet dabei zugleich einen Abschnitt der Produktgasableitung 32 aus.

Beim Zustand gemäß Fig. 3 ist das ausgangsseitige Verschlusselement 29 der zweiten Adsorberkammer 16 geöffnet, so dass Produktgas (N₂) in die Produktgassammelkammer 31 entweichen kann und dem Produktgasausgang 24 zugeführt werden kann. Auch hier bildet die Produktgassammelkammer 31 einen Teil der Produktgasableitung 32 aus. Das Verschlusselement 38 der zweiten Adsorberkammer ist im Zustand gemäß Fig. 3 verschlossen, so dass kein Gas in Richtung der gemeinsamen Kammer 30 entweichen kann.

Im Gegensatz zur zweiten Adsorberkammer 16 ist bei der ersten Adsorberkammer 15 in Fig. 3 das ausgangsseitige Verschlusselement 29 verschlossen, so dass kein Gas in die Produktgassammelkammer 31 entweichen kann und das Verschlusselement 38 geöffnet, so dass Restgas (O₂) in Richtung der gemeinsamen Kammer 30 und somit des Restgasausganges 25 entweichen kann.

Der Restgasausgang 25 ist gemäß Fig. 3 an einer Mantelfläche der zylinderförmigen Trenneinheit 23 vorgesehen und ist in Fluidverbindung mit der gemeinsamen Kammer 30.

Grund- und Deckfläche des zylinderartigen Körpers sind auch in dem Ausführungsbeispiel gemäß Fig. 3 gebogen, insbesondere als Klöpperböden und/oder Korbbogenböden ausgebildet.

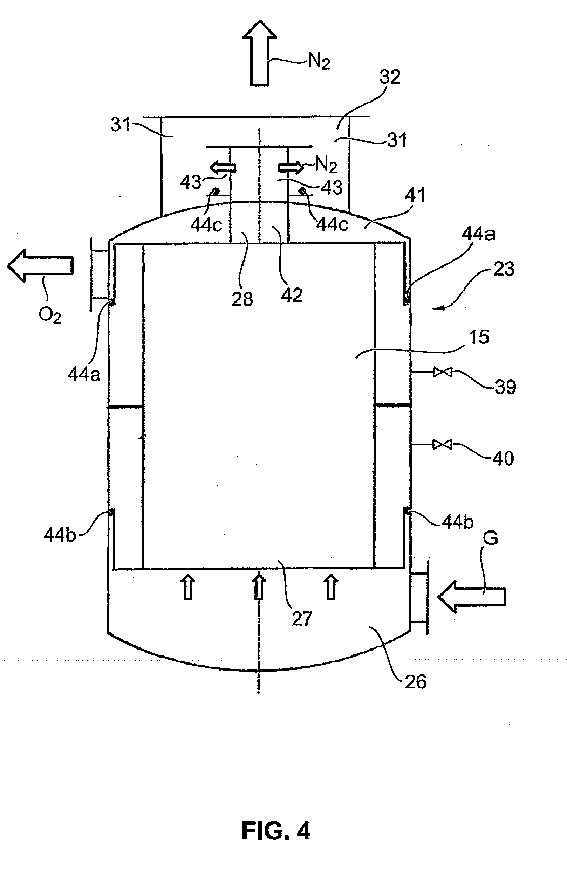

Fig. 4 zeigt eine schematische Darstellung eines Ausschnitts einer dritten Ausführungsform der Druckwechseladsorptionsanlage in einer ersten Einstellung. Bei dieser Ausführungsform ist die Adsorberkammer 15 (es können noch mehrere, allerdings nicht gezeigte, Adsorberkammern vorgesehen sein) innerhalb der Trenneinheit 23 verschieblich gelagert. Die Verschiebung wird hierbei über Ventile 39, 40 hydraulisch gesteuert. Die Ventile 39, 40 sind vorzugsweise Magnetventile, die ihre Impulse insbesondere über eine Steuereinheit (nicht gezeigt) erhalten. In Fig. 4 ist das Ventil 39 offen, wohingegen das Ventil 40 geschlossen ist. Durch eine über das geöffnete Ventil einströmende, an der Absorberkammer 15 anliegende Pressluft wird die Adsorberkammer 15 in nach oben (in Richtung ihres Ausganges) verschobener Position gehalten.

In der Stellung gemäß Fig. 4 ist ein sich an den Adsorberkammerausgang 28 anschließender Hohlzylinder 42 zusammen mit der Adsorberkammer 15 derart verschoben, dass an einer Hohlzylindermantelfläche vorgesehene Ausgangsöffnungen 43 (wobei auch nur eine Ausgangsöffnung vorgesehen sein kann) in Fluidverbindung mit der Produktgassammelkammer 31 stehen. In Fig. 4 befindet sich die Adsorberkammer 15 in der Adsorptionsphase. Zur Abdichtung einer Restgassammelkammer 41, die gemäß Fig. 4 nicht in Fluidverbindung mit den Ausgangsöffnungen 43 steht, ist mindestens ein Dichtelement 44a vorgesehen, das an (nicht gezeigten) konischen Dichtflächen anliegt. Das Dichtelement 44a ist vorzugsweise metallisch. Mindestens ein weiteres Dichtelement 44b ist zur Abdichtung der Eingangssammelkammer 26 vorgesehen.

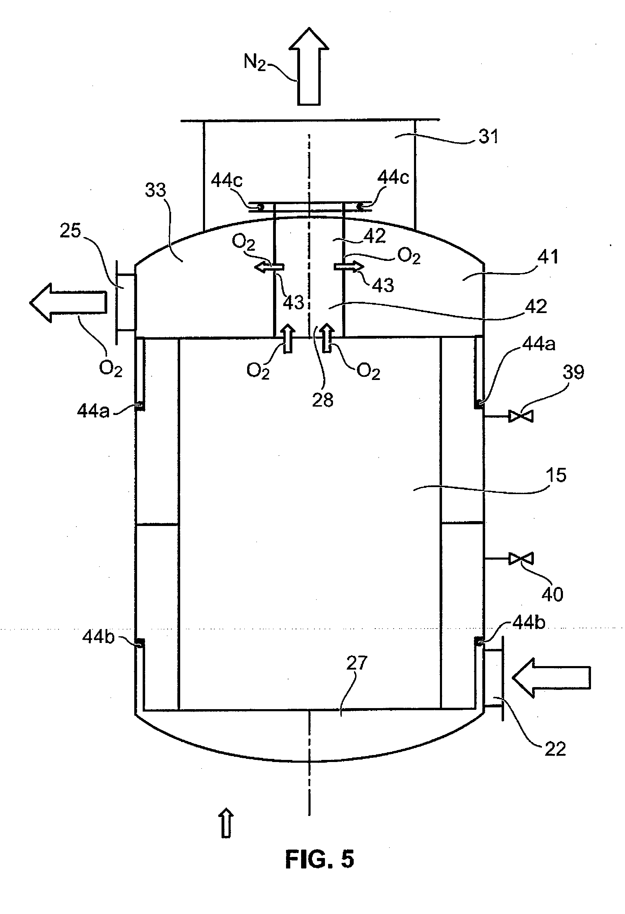

Fig. 5 zeigt die Ausführungsform gemäß Fig. 4 in einer zweiten Einstellung, bei der die Adsorberkammer 15 einschließlich Hohlzylinder 42 nach unten (in Richtung ihres Einganges 27) verschoben ist. Dazu wird entsprechend das Ventil 39 geschlossen und das Ventil 40 geöffnet. Durch die Verschiebung des Hohlzylinders 42 kommen dessen Ausgangsöffnungen 43 in Fluidverbindung mit der Restgassammelkammer 41, so dass aufgrund der damit verbundenen Druckabsenkung in der Adsorberkammer 15 Restgas desorbiert und über den Restgasausgang 25 entweichen kann. Die Restgassammelkammer 41 bildet dabei einen Teil der Restgasableitung 33 aus. Die Produktgassammelkammer 31 bildet einen Teil der Produktgasableitung 32 (siehe Fig. 4) aus. Die Adsorberkammer befindet sich gemäß Fig. 5 im Desorptionsmodus. Mindestens ein Dichtelement 44c dichtet in der Einstellung gemäß Figur 5 bzw. im Desorptionsmodus die Produktgassammelkammer 31 von der Restgassammelkammer 41 ab.

Der Druck am Eingang 22 kann beispielsweise etwa 10 bar betragen. Das zu trennende Gas kann Luft sein. Die Strömungsgeschwindigkeit in der Adsorberkammer 15 kann auf etwa 0,5 m/s eingestellt sein.

Die bewegte Adsorberkammer kann hydraulisch gedämpft sein, beispielsweise auch durch eine Kombination von Öl und Luft.

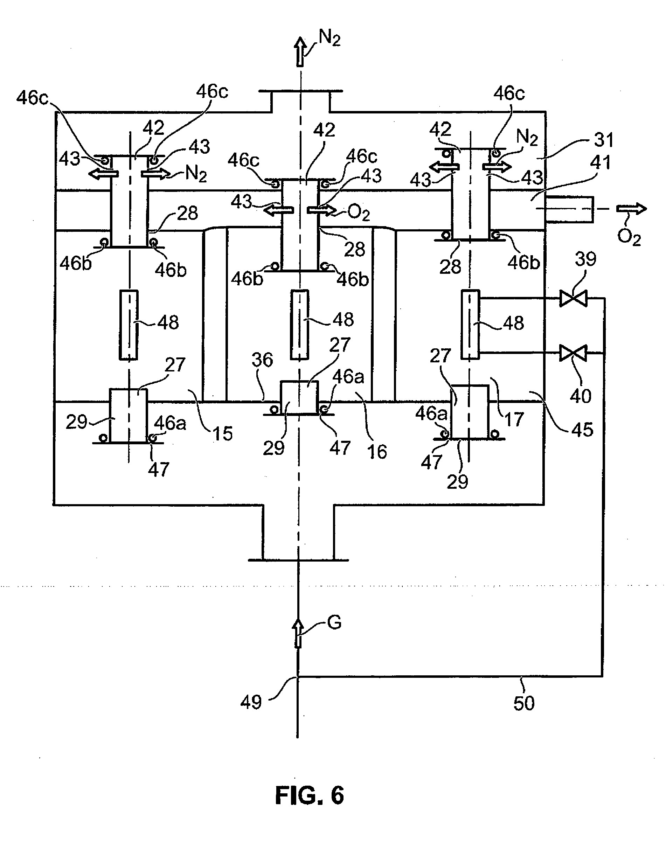

Fig. 6 zeigt eine schematische Darstellung eines Ausschnitts einer vierten Ausführungsform der Druckwechseladsorptionsanlage. Hier sind eine erste Adsorberkammer 15, eine zweite Adsorberkammer 16 und eine dritte Adsorberkammer 45 vorgesehen. Die erste Adsorberkammer 15 und die dritte Adsorberkammer 45 befinden sich im Adsorptionsmodus. Die zweite Adsorberkammer 16 befindet sich im Desorptionsmodus. Die Verschlusselemente 29 an den Adsorberkammereingängen 27 sind als zylindrische Teile ausgebildet und weisen erste Ringdichtungen 46a auf, die an Vorsprüngen 47 aufliegen. Das Verschlusselement 29 des Adsorberkammereingangs 27 der zweiten Adsorberkammer 16 ist derart in Richtung des Adsorberkammereingangs 27 verschoben, dass die Ringdichtung 46a an einen eingangsseitigen Rohrboden 36 der Adsorberkammer 16 anliegt und somit der Adsorberkammereingang 27 verschlossen ist.

Ein dem Adsorberkammerausgang 28 der zweiten Adsorberkammer 16 zugeordneter Hohlzylinder ist derart in Richtung Adsorberkammer 16 verschoben, dass Ausgangsöffnungen 43 in Fluidverbindung mit einer Restgassammelkammer 41 sind. Zweite und dritte Ringdichtungen 46b, 46c sind an dem Hohlzylinder 42 vorgesehen, um diesen fluiddicht gegenüber der Produktgassammelkammer 31 abzuschließen. Konkret sind die zweiten Ringdichtungen 46b vorgesehen, um die Adsorberkammern 15, 16, und 45 gegenüber der Restgassammelkammer 41 abzudichten und die dritten Ringdichten 46c, um die Restgassammelkammer 41 von der Produktgassammelkammer 31 abzudichten. Alle drei Hohlzylinder 42 sind dabei gegenüber den Adsorberkammern 15, 16 und 45 verschieblich gelagert.

Bei den Adsorberkammern 15 und 45 sind die eingangsseitigen Verschlusselemente 29 in einer Öffnungsstellung, so dass Gas in die Adsorberkammern 15 und 45 einströmen kann. Die Hohlzylinder 42 der Adsorberkammern 15 und 45 sind derart von den Adsorberkammern 15, 45 weggeschoben, dass die entsprechenden Ausgangsöffnungen 43 in Fluidverbindung mit der Produktgassammelkammer 31 stehen. Die den Adsorberkammern 15, 45 näher liegenden Ringdichtungen 46 liegen dabei an eine Wandung der Adsorberkammern 15, 45 im Bereich der Adsorberkammerausgänge 28 an, so dass vermieden wird, dass Produktgas in die Restgassammelkammer 41 abströmt.

Die Ausgangsöffnungen 43 befinden sich in der Mantelfläche der Hohlzylinder 42. Die Ausgangsöffnungen 43 bzw. Hohlzylinder 42 sind derart vorgesehen und angeordnet, dass kein Kurzschluss zwischen der Produktgassammelkammer 31 und der Restgassammelkammer 41 möglich ist. Die Verschiebung der Verschlusselemente 29 und der Hohlzylinder 42 erfolgt über eine Ansteuerung von Pneumatikzylindern 48 mittels Ventilen 39, 40, die vorzugsweise als Magnetventile ausgebildet sind. Als Steuerluft kann vorzugsweise das zu trennende Gas dienen. Ein ausreichend hoher Druck ist bedingt durch den Adsorptionsprozess vorhanden. In diesem Zusammenhang ist eine Gasabtrennung 49 vorgesehen, die Gas aus dem zu trennenden Gasstrom abzweigt und über eine Leitung 50 den Ventilen 39, 40 zuführt. In Fig. 6 ist, um die Übersichtlichkeit zu wahren, nur für den Pneumatikzylinder 48 der dritten Adsorberkammer 45 eine entsprechenden Zuführung von Steuergas über die Leitung 50 gezeigt. Eine Steuerung der Pneumatikzylinder 48 der ersten und zweiten Adsorberkammer 15, 16 kann analog erfolgen (nicht in Figuren gezeigt).

Eine Vorspannung einer Adsorberkammer, die gerade desorbiert ist, kann von der Seite des zu trennenden Gasgemisches oder der Produktgasseite über die Verschlusselemente 29 bzw. die Hohlzylinder 42 erfolgen.

Die vorgeschlagenen Druckwechseladsorptionsanlagen können einen kontinuierlichen Luftstrom verarbeiten und kontinuierlich beispielsweise N₂ liefern. Es gibt keine verbindenden Rohrleitungen, durch die zeitlich versetzt O₂ und N₂ (bzw. Produktgas und Restgas) strömen.

Die Verschlusselemente 29 bzw. Hohlzylinder 42 können durch jeweils separate Pneumatikzylinder oder pro Adsorberkammer durch jeweils nur einen gemeinsamen Pneumatikzylinder angetrieben bzw. verschoben werden.

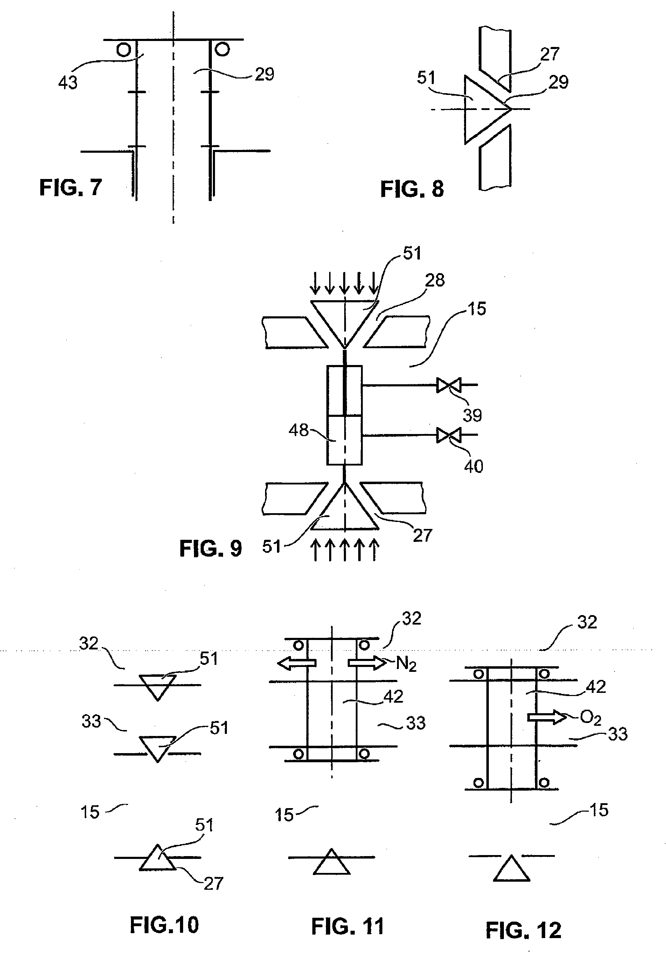

Die Fiuren 7 bis 12 zeigen verschiedene Ausführungsformen von Verschlusselementen 29 für den eingangs- und ausgangsseitigen Verschluss der Adsorberkammern. In Fig. 7 ist eine erste Grundform eines ausgangsseitigen Verschlusselementes 29 (konkret Hohlzylinder 42) gezeigt, die bereits weiter oben im Zusammenhang mit Fig. 6 beschrieben wurde. Fig. 8 zeigt eine alternative Ausführungsform eines Verschlusselementes 29, das im vorliegenden Fall einen Konus umfasst, der in eine entsprechende schrägflächenberänderte Öffnung einführbar ist, wodurch die Eingangsöffnung 27 (oder analog eine Ausgangsöffnung) durch Verschieben des Konus 51 verschließbar ist.

Fig. 9 zeigt eine Adsorberkammer 15 (ausschnittsweise), bei der Eingangsöffnungen 27 und Ausgangsöffnungen 28 analog Fig. 8 verschließbar sind, wobei ein Pneumatikzylinder 48, der über Ventile 39, 40 gesteuert wird, die Verschiebung ermöglichen kann. Spitzen der Konen gemäß Fig. 9 sind jeweils in das Innere der Adsorberkammer 15 gerichtet.

Fig. 10 zeigt eine Ausführungsform, bei der der Adsorberkammereingang 27 und eine Verbindung zu einer Restgasleitung 33 sowie einer Produktgasleitung 32 jeweils über Konen 51 verschließbar sind. In Fig. 11 und 12 sind nur die Adsorberkammereingänge 27 über einen Konus 51 verschließbar, wohingegen die Verbindungen von Adsorberkammer 15 zu Restgasableitung 33 und Produktgasableitung 32, wie in Fig. 6 beschrieben, über Hohlzylinder 42 herstellbar sind.

Die Druckwechseladsorptionsanlage kann vorzugsweise für dieselben Anwendungen herangezogen werden, wie sie bereits in den Ausführungen zum Stand der Technik erwähnt wurden.

An dieser Stelle sei darauf hingewiesen, dass alle oben beschriebenen Teile für sich alleine gesehen und in jeder Kombination, insbesondere die in den Zeichnungen dargestellten Details, als erfindungswesentlich beansprucht werden. Abänderungen hiervon sind dem Fachmann geläufig.

### Bezugszeichenliste:

- G: Gas
- N₂: Stickstoff
- O₂: Sauerstoff

- 10: Verdichter
- 11: Vorfilter
- 12: Kältetrockner
- 13: Submikrofilter
- 14: Aktivkohlefilter
- 15: Erste Adsorberkammer
- 16: Zweite Adsorberkammer
- 17: Pufferbehälter
- 18: Schalldämpfer
- 19: Analysevorrichtung
- 20: Druckmessvorrichtung
- 21: Öl-Wasser-Trenner
- 22: Eingang
- 23: Trenneinheit
- 24: Produktgasausgang
- 25: Restgasausgang
- 26: Eingangssammelkammer
- 27: Adsorberkammereingang
- 28: Adsorberkammerausgang
- 29: Verschlusselement
- 30: Gemeinsame Kammer
- 31: Produktgassammelkammer
- 32: erste Gasableitung (Produktgasableitung)
- 33: zweite Gasableitung (Restgasableitung)
- 34: Drehgelenk
- 35: Schwenkvorrichtung
- 36: Rohrboden
- 37: Drehachse
- 38: Verschlusselemente
- 39: Ventil
- 40: Ventil
- 41: Restgassammelkammer
- 42: Hohlzylinder
- 43: Ausgangsöffnung
- 44a: Dichtelement
- 44b: Dichtelement
- 45: Dritte Adsorberkammer
- 46a: Ringdichtung
- 46b: Ringdichtung
- 46c: Ringdichtung
- 47: Vorsprung
- 48: Pneumatikzylinder
- 49: Gasabtrennung
- 50: Leitung
- 51: Konus

## Patentansprüche

1. Druckwechseladsorptionsanlage zum Trennen eines ersten Gases eines Gasgemisches, insbesondere Stickstoff (N₂) von einem zweiten Gas, insbesondere Sauerstoff (O₂), umfassend mindestens zwei Adsorberkammern (15, 16, 45) zum Adsorbieren des zweiten Gases mit jeweils mindestens einem Adsorberkammereingang (27) und mindestens einem Adsorberkammerausgang (28),
**dadurch gekennzeichnet, dass**
eine Verbindungswechseleinrichtung derart vorgesehen und ausgebildet ist, dass mindestens ein Adsorberkammerausgang (28) alternierend sowohl mit einer ersten Gasableitung (32) für eine Ableitung des ersten Gases als auch mit einer zweiten Gasableitung (33) für eine Ableitung des zweiten Gases verbindbar ist, wobei mindestens eine zweite Gasableitung (33) derart verschieblich und/oder rotierbar ist, dass mindestens zwei Adsorberkammerausgänge (28) an die zweite Gasableitung (33) alternierend anschließbar sind

2. Druckwechseladsorptionsanlage nach Anspruch 1,
**dadurch gekennzeichnet, dass**
mindestens zwei Adsorptionskammern (15, 16, 45) vorgesehen sind, die insbesondere jeweils alternierend sowohl mit einer ersten Gasableitung (32) als auch mit der zweiten Gasableitung (33) verbindbar sind.

3. Druckwechseladsorptionsanlage nach Anspruch 1 oder 2,
**dadurch gekennzeichnet, dass**
mindestens zwei oder mindestens drei, insbesondere alle Adsorptionskammern (15, 16, 45) mit derselben ersten Gasableitung (32) und/oder zweiten Gasableitung (33) verbindbar sind.

4. Druckwechseladsorptionsanlage nach einem der vorhergehenden Ansprüche,
**dadurch gekennzeichnet, dass**
mindestens ein Adsorberkammerausgang (28) mit einer ersten und/oder zweiten Gasableitung (32, 33) unmittelbar, ohne Verbindungsleitungen vorzusehen, verbindbar ist.

5. Druckwechseladsorptionsanlage nach einem der vorhergehenden Ansprüche,
**dadurch gekennzeichnet, dass**
die mindestens eine erste Gasableitung (32) mit einem höheren Druck von beispielsweise 5 bar bis 13 bar, insbesondere 7 bar bis 10 bar, vorzugsweise etwa 8 bar und die mindestens eine zweite Gasableitung mit einem im Vergleich zum höheren Druck niedrigeren Druck von beispielsweise 0,1 bar bis 3 bar, insbesondere 0,5 bar bis 2 bar, vorzugsweise etwa 1 bar beaufschlagbar ist.

6. Druckwechseladsorptionsanlage nach einem der vorhergehenden Ansprüche,
**dadurch gekennzeichnet, dass**
mindestens drei Adsorberkammern (15, 16, 45) vorgesehen sind, wobei die Verbindungswechseleinrichtung derart ausgebildet ist, dass nur eine der Adsorberkammern (15, 16, 45) mit der zweiten Gasableitung (33) verbindbar ist.

7. Druckwechseladsorptionsanlage nach einem der vorhergehenden Ansprüche,
**dadurch gekennzeichnet, dass**
die Verbindungswechseleinrichtung derart ausgebildet ist, dass n Adsorberkammerausgänge (28) mit einer ersten Gasableitung (32) verbindbar sind und m Adsorberkammerausgänge (28) mit einer zweiten Gasableitung (33) verbindbar sind und das Verhältnis n/m mindestens 1,5, vorzugsweise mindestens 2, vorzugsweise mindestens 5, insbesondere mindestens 10 beträgt.

8. Druckwechseladsorptionsanlage nach einem der vorhergehenden Ansprüche,
**dadurch gekennzeichnet, dass**
mindestens zwei, insbesondere alle Adsorberkammereingänge (27) mit einer Eingangssammelkammer (26) verbindbar sind.

9. Druckwechseladsorptionsanlage nach einem der vorhergehenden Ansprüche,
**dadurch gekennzeichnet, dass**
mindestens ein Adsorberkammereingang (27) mit einem Druck von 5 bar bis 15 bar, insbesondere 8 bar bis 12 bar, vorzugsweise 9 bar bis 10 bar beaufschlagt ist.

10. Druckwechseladsorptionsanlage nach einem der vorhergehenden Ansprüche,
**dadurch gekennzeichnet, dass**
die zweite Gasableitung (33) zumindest teilweise innerhalb der ersten Gasableitung (32) verläuft.

11. Druckwechseladsorptionsanlage nach einem der vorhergehenden Ansprüche,
**dadurch gekennzeichnet, dass**
die zweite Gasableitung (33) ein Drehgelenk (34) und/oder eine Schwenkvorrichtung (35), insbesondere einen Schwenkbogen aufweist.

12. Druckwechseladsorptionsanlage nach einem der vorhergehenden Ansprüche,
**dadurch gekennzeichnet, dass**
mindestens ein Adsorberkammerausgang (28) baulich in mindestens zwei Einzeladsorberkammerausgänge unterteilt ist, wobei ein erster Einzeladsorberkammerausgang zum Anschluss an die erste Gasableitung (32) und ein zweiter Einzeladsorberkammerausgang zum Anschluss an die zweite Gasableitung (33) ausgebildet ist.

13. Druckwechseladsorptionsanlage nach Anspruch 12,
**dadurch gekennzeichnet, dass**
der erste und/oder zweite Einzeladsorberkammerausgang durch separate Verschlusselemente oder durch ein einzelnes Verschlusselement verschließbar ist/sind.

14. Druckwechseladsorptionsanlage nach einem der vorhergehenden Ansprüche,
**dadurch gekennzeichnet, dass**
die mindestens eine Adsorberkammer (15, 16, 45) insbesondere mindestens zwei Adsorberkammern (15, 16, 45) zumindest teilweise in einer gemeinsamen Kammer (30) untergebracht ist/sind, die vorzugsweise mindestens einen Teil der zweiten Gasableitung (33) ausbildet.

15. Druckwechseladsorptionsanlage nach einem der vorhergehenden Ansprüche,
**dadurch gekennzeichnet, dass**
die Verbindungswechseleinrichtung mindestens ein Hohlkörperelement umfasst, das derart rotatorisch und/oder translatorisch verschieblich ist, dass infolge der Rotation und/oder Translation ein Hohlkörperelementausgang alternierend mit der ersten und zweiten Gasableitung (32, 33) verbindbar ist.

16. Druckwechseladsorptionsanlage nach Anspruch 15,
**dadurch gekennzeichnet, dass**
das Hohlkörperelement als insbesondere translatorisch verschieblicher Hohlzylinder (42) ausgebildet ist, der vorzugsweise im Bereich seiner Mantelfläche mindestens eine Öffnung aufweist.

17. Druckwechseladsorptionsanlage nach einem der vorhergehenden Ansprüche,
**dadurch gekennzeichnet, dass**
mindestens ein Verschlusselement (29) eines Adsorberkammereingangs (27) und/oder mindestens ein Verschlusselement (29) eines Adsorberkammerausgangs (28) zumindest bereichsweise konisch ausgebildet ist.

18. Druckwechseladsorptionsanlage nach einem der vorhergehenden Ansprüche,
**dadurch gekennzeichnet, dass**
mindestens eine Adsorberkammer (15, 16, 45) translatorisch und/oder rotatorisch verschieblich gelagert ist derart, dass infolge der Verschiebung ein Adsorberkammerausgang (28) mit der ersten und zweiten Gasableitung (32, 33) alternierend verbindbar ist.

19. Druckwechseladsorptionsanlage nach einem der vorhergehenden Ansprüche,
**dadurch gekennzeichnet, dass**
eine Verschiebung der Verschlusselemente (29) und/oder der Adsorberkammer (15, 16, 45) pneumatisch, insbesondere mittels mindestens einen dafür vorgesehenen Pneumatikzylinders (48), steuerbar ist.

20. Druckwechseladsorptionsanlage nach Anspruch 19,
**dadurch gekennzeichnet, dass**
eine Gasabtrennung (49) vorgesehen ist derart, dass ein Steuergas zur Steuerung der Verschiebung von dem zu trennenden Strom des Gasgemisches abzweigbar ist.

21. Druckwechseladsorptionsverfahren, insbesondere unter Verwendung der Druckwechseladsorptionsanlage nach einem der vorangehenden Ansprüche, zum Trennen eines ersten Gases eines Gasgemisches, insbesondere Stickstoff (N₂) von einem zweiten Gas, insbesondere Sauerstoff (O₂) umfassend die Schritte:
a) Einleiten des Gasgemisches in eine Adsorberkammer (15, 16, 45) über einen Adsorberkammereingang (27) unter erhöhtem Druck derart, dass das zweite Gas zumindest teilweise adsorbiert und Verbinden eines Adsorberkammerausgangs (28) mit einer ersten Gasableitung (32) derart, dass der nicht adsorbierte Teil des Gasgemisches über die erste Gasableitung (32) abströmt und
b) Trennen des Adsorberkammerausgangs (28) von der ersten Gasableitung (32) und Verbinden des Adsorberkammerausgangs (28) mit einer zweiten Gasableitung (33) und Reduktion des Druckes in der Adsorberkammer (15, 16, 45) derart, dass adsorbiertes Gas desorbiert und über die zweite Gasableitung (33) abströmt, wobei mindestens eine zweite Gasableitung (33) derart verschieblich und/oder rotierbar ist, dass mindestens zwei Adsorberkammerausgänge (28) an die zweite Gasableitung (33) alternierend anschließbar sind.

22. Druckwechseladsorptionsverfahren nach Anspruch 21,
**dadurch gekennzeichnet, dass**
im Schritt a) und/oder b) der am Adsorberkammereingang (27) anliegende Druck auf 5 bar bis 15 bar, vorzugsweise 8 bar bis 12 bar, insbesondere 9 bar bis 11 bar eingestellt wird und/oder der Druck am Adsorberkammerausgang (28) im Schritt a) auf 4 bar bis 10 bar, insbesondere 5 bar bis 8 bar, vorzugsweise 6 bar bis 7 bar eingestellt wird und/oder der Druck am Adsorberkammerausgang (28) im Schritt b) auf 0,1 bar bis 2 bar, insbesondere etwa 1 bar eingestellt wird.

23. Druckwechseladsorptionsverfahren nach Anspruch 21 oder 22,
**dadurch gekennzeichnet, dass**
ein Verhältnis von einer Adsorptionszeit im Schritt a) zu einer Desorptionszeit im Schritt b) etwa mindestens 1,5, vorzugsweise mindestens 2, weiter vorzugsweise mindestens 5, insbesondere mindestens 10 beträgt.

24. Druckwechseladsorptionsverfahren nach einem der Ansprüche 21 bis 23,
**dadurch gekennzeichnet, dass**
zu einem beliebigen Zeitpunkt ein Adsorptionszyklus für eine Anzahl n von Adsorptionskammer (15, 16, 45) durchgeführt wird und zugleich ein Desorptionszyklus für eine Anzahl m, insbesondere m=1, durchgeführt wird, wobei ein Verhältnis n/m mindestens 1,5, vorzugsweise mindestens 2, insbesondere mindestens 10 beträgt.

25. Druckwechseladsorptionsverfahren nach einem der Ansprüche 21 bis 24,
**dadurch gekennzeichnet, dass**
mindestens eine Adsorberkammer (15, 16, 45) translatorisch und/oder rotatorisch verschoben wird derart, dass infolge der Verschiebung ein Adsorberkammerausgang (28) mit der ersten und zweiten Gasableitung (32, 33) alternierend verbunden wird.

26. Druckwechseladsorptionsverfahren nach einem der Ansprüche 21 bis 25,
**dadurch gekennzeichnet, dass**
eine Verschiebung der Verschlusselemente (29) und/oder der Adsorberkammern (15, 16, 45) pneumatisch, insbesondere mittels mindestens einen dafür vorgesehenen Pneumatikzylinders (48) gesteuert wird.

27. Druckwechseladsorptionsverfahren nach Anspruch 26,
**dadurch gekennzeichnet, dass**
von dem zu trennenden Strom des Gasgemisches ein Teil abgezweigt wird, um die Verschiebung der Verschlusselemente (29) zu steuern.

## Claims

1. A pressure swing adsorption unit for separating a first gas of a gas mixture, e.g. nitrogen (N₂), from a second gas, e.g. oxygen (O₂), comprising at least two adsorption chambers (15, 16, 45) for adsorbing the second gas, each having at least one adsorption chamber inlet (27) and at least one adsorption chamber outlet (28),
**characterized in that**
a connection changing device is provided and formed such that at least one adsorption chamber outlet (28) can be connected alternately to both a first gas discharge line (32) for discharging the first gas and a second gas discharge line (33) for discharging the second gas, wherein at least one second gas discharge line (33) is displaceable and/or rotatable such that at least two adsorption chamber outlets (28) can be connected alternately to the second gas discharge line (33).

2. The pressure swing adsorption unit according to claim 1,
**characterized in that**
at least two adsorption chambers (15, 16, 45) are provided, which, in particular, can each be alternately connected to both a first gas discharge line (32) and the second gas discharge line (33).

3. The pressure swing adsorption unit according to claim 1 or 2,
**characterized in that**
at least two or at least three, in particular all of the adsorption chambers (15, 16, 45) can be connected to the same first gas discharge line (32) and/or second gas discharge line (33).

4. The pressure swing adsorption unit according to any one of the preceding claims,
**characterized in that**
at least one adsorption chamber outlet (28) can be directly, without providing connecting lines, connected to a first and/or second gas discharge line (32, 33).

5. The pressure swing adsorption unit according to any one of the preceding claims,
**characterized in that**
the at least one gas discharge line (32) may be subjected to a higher pressure of e.g. 5 bars to 13 bars, in particular 7 bars to 10 bars, preferably approximately 8 bars, and the at least one second gas discharge line with a lower pressure, as compared to the higher pressure of e.g. 0.1 bar to 3 bars, in particular 0.5 bar to 2 bars, preferably approximately 1 bar.

6. The pressure swing adsorption unit according to any one of the preceding claims,
**characterized in that**
at least three adsorption chambers (16, 16, 45) are provided, wherein the connection changing device is formed such that only one of the adsorption chambers (15, 16, 45) can be connected to the second gas discharge line (33).

7. The pressure swing adsorption unit according to any one of the preceding claims,
**characterized in that**
the connection changing device is formed such that n adsorption chamber outlets (28) can be connected to a first gas discharge line (32), and m adsorption chamber outlets (28) can be connected to a second gas discharge line (33), and the ratio n/m is at least 1.5, preferably at least 2, preferably at least 5, in particular at least 10.

8. The pressure swing adsorption unit according to any one of the preceding claims,
**characterized in that**
at least two, in particular all of the adsorption chamber inlets (27) can be connected to an inlet collection chamber (26).

9. The pressure swing adsorption unit according to any one of the preceding claims,
**characterized in that**
at least one adsorption chamber inlet (27) is subjected to a pressure of 5 bars to 15 bars, in particular 8 bars to 12 bars, preferably 9 bars to 10 bars.

10. The pressure swing adsorption unit according to any one of the preceding claims,
**characterized in that**
the second gas discharge line (33) runs at least partially within the first gas discharge line (32).

11. The pressure swing adsorption unit according to any one of the preceding claims,
**characterized in that**
the second gas discharge line (33) comprises a swivel joint (34) and/or a swivel device (35), in particular a swivel elbow.

12. The pressure swing adsorption unit according to any one of the preceding claims,
**characterized in that**
at least one adsorption chamber outlet (28) is structurally divided into at least two single adsorption chamber outlets, wherein a first single adsorption chamber outlet is formed to be connected to the first gas discharge line (32) and a second single adsorption chamber outlet is formed to be connected to the second gas discharge line (33).

13. The pressure swing adsorption unit according to claim 12,
**characterized in that**
the first and/or second single adsorption chamber outlet can be closed by separate closing elements or by one single closing element.

14. The pressure swing adsorption unit according to any one of the preceding claims,
**characterized in that**
the at least one adsorption chamber (15, 16, 45), in particular at least two adsorption chambers (15, 16, 45) is/are accommodated at least partially in a common chamber (30), which preferably forms at least a part of the second gas discharge line (33).

15. The pressure swing adsorption unit according to any one of the preceding claims,
**characterized in that**
the connection changing device comprises at least one hollow body element, which is rotationally and/or translationally displaceable in such a manner, that a hollow body element outlet can be alternately connected to the first and second gas discharge lines (32, 33) due to the rotation and/or translation.

16. The pressure swing adsorption unit according to claim 15,
**characterized in that**
the hollow body element is formed as an e.g. translationally displaceable hollow cylinder (42), which preferably has at least one opening in the area of its envelope.

17. The pressure swing adsorption unit according to any one of the preceding claims,
**characterized in that**
at least one closing element (29) of an adsorption chamber inlet (27) and/or at least one closing element (29) of an adsorption chamber outlet (28) is/are formed to be conical at least in areas.

18. The pressure swing adsorption unit according to any one of the preceding claims,
**characterized in that**
at least one adsorption chamber (15, 16, 45) is supported to be translationally and/or rotationally displaceable in such a manner that due to the displacement an adsorption chamber outlet (28) can be alternately connected to the first and second gas discharge line (32, 33) due to the displacement.

19. The pressure swing adsorption unit according to any one of the preceding claims,
**characterized in that**
displacement of the closing elements (29) and/or the adsorption chamber (15, 16, 45) can be controlled pneumatically, in particular by means of at least one pneumatic cylinder (48) provided for that purpose.

20. The pressure swing adsorption unit according to claim 19,
**characterized in that**
a gas separation (49) is provided in such a manner that a control gas for controlling the displacement can be branched off from the gas mixture flow to be separated.

21. A pressure swing adsorption method, in particular using the pressure swing
adsorption unit according to any one of the preceding claims, for separating a first gas of a gas mixture, in particular nitrogen (N₂), from a second gas, in particular oxygen (O₂), comprising the steps of:
a) leading a gas mixture into an adsorption chamber (15, 16, 45) via an adsorption chamber inlet (27) at an increased pressure in such a manner that the second gas is at least partially adsorbed, and
connecting an adsorption chamber outlet (28) to a first gas discharge line (32) in such a manner that the non-absorbed part of the gas mixture flows out via the first gas discharge line (32), and
b) separating the adsorption chamber outlet (28) from the first gas discharge line (32) and connecting the adsorption chamber outlet (28) to a second gas discharge line (33), and reducing the pressure within the adsorption chamber (15, 16, 45) in such a manner that adsorbed gas is desorbed and flows out via the second gas discharge line (33), wherein at least one second gas discharge line (33) can be displaced and/or rotated in such a manner that at least two adsorption chamber outlets (28) can be alternately connected to the second gas discharge line (33).

22. The pressure swing adsorption method according to claim 21,
**characterized in that**
in step a) and/or step b), the pressure applied to the adsorption chamber inlet (27) is set to 5 bars to 15 bars, preferably 8 bars to 12 bars, in particular 9 bars to 11 bars, and/or in step a), the pressure to the adsorption chamber outlet (28) is set to 4 bars to 10 bars, in particular 5 bars to 8 bars, preferably 6 bars to 7 bars, and/or the pressure to the adsorption chamber outlet (28) in step b) is set to 0.1 bars to 2 bars, in particular 1 bar.

23. The pressure swing adsorption method according to claim 21 or 22,
**characterized in that**
a ratio of an adsorption time in step a) to a desorption time in step b) is at least about 1.5, preferably at least 2, further preferably at least 5, in particular at least 10.

24. The pressure swing adsorption method according to any one of claims 21 to 23,
**characterized in that**
at an arbitrary point in time an adsorption cycle for a number n of adsorption chambers (15, 16, 45) is conducted and at the same time a desorption cycle for a number m, in particular m=1, is conducted, wherein a ratio n/m is at least 1.5, preferably at least 2, in particular at least 10.

25. The pressure swing adsorption method according to any one of claims 21 to 24,
**characterized in that**
at least one adsorption chamber (15, 16, 45) is displaced translationally and/or rotationally in such a manner that due to the displacement an adsorption chamber outlet (28) is alternately connected to the first and second gas discharge line (32, 33).

26. The pressure swing adsorption method according to any one of claims 21 to 25,
**characterized in that**
a displacement of the closing elements (29) and/or the adsorption chambers (15, 16, 45) is controlled pneumatically, in particular by means of at least one pneumatic cylinder (48) provided for that purpose.

27. The pressure swing adsorption method according to claim 26,
**characterized in that**
a part of the gas mixture flow to be separated is branched off in order to control the displacement of the closing elements (29).

## Revendications

1. Installation d'adsorption par changement de pression pour séparer un premier gaz d'un mélange de gaz, en particulier de l'azote (N₂), d'un deuxième gaz, en particulier de l'oxygène (O₂), comprenant au moins deux chambres adsorbantes (15, 16, 45) pour e' adsorption du deuxième gaz avec respectivement au moins une entrée de chambre adsorbante (27) et au moins une sortie de chambre adsorbante (28),
**caractérisée en ce que**
un dispositif de changement de liaison est prévu et constitué de telle sorte qu'au moins une sortie de chambre adsorbante (28) soit apte à être reliée en alternance aussi bien à une première conduite d'évacuation de gaz (32) pour une évacuation du premier gaz qu'à une deuxième conduite d'évacuation de gaz (33) pour une évacuation du deuxième gaz, au moins une deuxième conduite d'évacuation de gaz (33) étant mobile en translation et/ou en rotation de telle sorte qu'au moins deux sorties de chambre adsorbante (28) soient aptes à être raccordées en alternance à la deuxième conduite d'évacuation de gaz (33).

2. Installation d'adsorption par changement de pression selon la revendication 1,
**caractérisée en ce que**
au moins deux chambres adsorbantes (15, 16, 45) sont prévues, qui, en particulier, sont aptes à être reliées respectivement en alternance aussi bien à une première conduite d'évacuation de gaz (32) qu'à la deuxième conduite d'évacuation de gaz (33).

3. Installation d'adsorption par changement de pression selon la revendication 1 ou 2,
**caractérisée en ce que**
au moins deux ou au moins trois, en particulier toutes les chambres adsorbantes (15, 16, 45) sont aptes à être reliées à la même première conduite d'évacuation de gaz (32) et/ou deuxième conduite d'évacuation de gaz (33).

4. Installation d'adsorption par changement de pression selon l'une des revendications précédentes,
**caractérisée en ce que**
au moins une sortie de chambre adsorbante (28) est apte à être reliée directement, sans prévoir de conduites de liaison, à une première et/ou deuxième conduite d'évacuation de gaz (32, 33).

5. Installation d'adsorption par changement de pression selon l'une des revendications précédentes,
**caractérisée en ce que**
l'au moins une première conduite d'évacuation de gaz (32) est apte à être chargée avec une pression supérieure de par exemple 5 bars à 13 bars, en particulier 7 bars à 10 bars, de préférence environ 8 bars et l'au moins une deuxième conduite d'évacuation de gaz est apte à être chargée avec une pression moindre, en comparaison avec la pression supérieure, de par exemple 0,1 bar à 3 bars, en particulier 0,5 bar à 2 bars, de préférence environ 1 bar.

6. Installation d'adsorption par changement de pression selon l'une des revendications précédentes,
**caractérisée en ce que**
au moins trois chambres adsorbantes (15, 16, 45) sont prévues, le dispositif de changement de liaison étant constitué de telle sorte que seule une des chambres adsorbantes (15, 16, 45) soit apte à être reliée à la deuxième conduite d'évacuation de gaz (33).

7. Installation d'adsorption par changement de pression selon l'une des revendications précédentes,
**caractérisée en ce que**
le dispositif de changement de liaison est constitué de telle sorte que n sorties de chambre adsorbante (28) soient aptes à être reliées à une première conduite d'évacuation de gaz (32) et m sorties de chambre adsorbante (28) soient aptes à être reliées à une deuxième conduite d'évacuation de gaz (33) et **en ce que** le rapport n/m est d'au moins 1,5, de préférence d'au moins 2, de préférence d'au moins 5, en particulier d'au moins 10.

8. Installation d'adsorption par changement de pression selon l'une des revendications précédentes,
**caractérisée en ce que**
au moins deux, en particulier toutes les entrées de chambre adsorbante (27) sont aptes à être reliées à une chambre collectrice d'entrée (26).

9. Installation d'adsorption par changement de pression selon l'une des revendications précédentes,
**caractérisée en ce que**
au moins une entrée de chambre adsorbante (27) est apte à être chargée avec une pression de 5 bars à 15 bars, en particulier 8 bars à 12 bars, de préférence 9 bars à 10 bars.

10. Installation d'adsorption par changement de pression selon l'une des revendications précédentes,
**caractérisée en ce que**
la deuxième conduite d'évacuation de gaz (33) passe au moins en partie à l'intérieur de la première conduite d'évacuation de gaz (32).

11. Installation d'adsorption par changement de pression selon l'une des revendications précédentes,
**caractérisée en ce que**
la deuxième conduite d'évacuation de gaz (33) présente une articulation tournante (34) et/ou un dispositif de pivotement (35), en particulier un coude de pivotement.

12. Installation d'adsorption par changement de pression selon l'une des revendications précédentes,
**caractérisée en ce que**
au moins une sortie de chambre adsorbante (28) est subdivisée, en termes de construction, en au moins deux sorties de chambre adsorbante individuelles, une première sortie de chambre adsorbante individuelle étant constituée pour le raccordement à la première conduite d'évacuation de gaz (32) et une deuxième sortie de chambre adsorbante individuelle est constituée pour le raccordement à la deuxième conduite d'évacuation de gaz (33).

13. Installation d'adsorption par changement de pression selon la revendication 12,
**caractérisée en ce que**
la première et/ou la deuxième sortie de chambre adsorbante individuelle est/sont apte/s à être fermée/s par des éléments de fermeture séparés ou par un élément de fermeture individuel.

14. Installation d'adsorption par changement de pression selon l'une des revendications précédentes,
**caractérisée en ce que**
l'au moins une chambre adsorbante (15, 16, 45), en particulier au moins deux chambres adsorbantes (15, 16, 45), est/sont logée/s au moins en partie dans une chambre commune (30) qui constitue de préférence au moins une partie de la deuxième conduite d'évacuation de gaz (33).

15. Installation d'adsorption par changement de pression selon l'une des revendications précédentes,
**caractérisée en ce que**
le dispositif de changement de liaison comprend au moins un élément à corps creux qui est mobile en rotation et/ou en translation de telle sorte que, suite à la rotation et/ou translation, une sortie d'élément à corps creux soit apte à être reliée en alternance avec la première et la deuxième conduite d'évacuation de gaz (32, 33).

16. Installation d'adsorption par changement de pression selon la revendication 15,
**caractérisée en ce que**
l'élément à corps creux est constitué comme cylindre creux (42) mobile en particulier en translation, qui présente de préférence au moins une ouverture dans la zone de sa face d'enveloppe.

17. Installation d'adsorption par changement de pression selon l'une des revendications précédentes,
**caractérisée en ce que**
au moins un élément de fermeture (29) d'une entrée de chambre adsorbante (27) et/ou au moins un élément de fermeture (29) d'une sortie de chambre adsorbante (28) est constitué, au moins par zones, de façon conique.

18. Installation d'adsorption par changement de pression selon l'une des revendications précédentes,
**caractérisée en ce que**
au moins une chambre adsorbante (15, 16, 45) est logée de façon mobile en translation et/ou en rotation de telle sorte que, suite au déplacement, une sortie de chambre adsorbante (28) soit apte à être reliée en alternance à la première et la deuxième conduite d'évacuation de gaz (32, 33).

19. Installation d'adsorption par changement de pression selon l'une des revendications précédentes,
**caractérisée en ce que**
un déplacement des éléments de fermeture (29) et/ou des chambres adsorbantes (15, 16, 45) est apte à être piloté de façon pneumatique, en particulier au moyen d'au moins un cylindre pneumatique (48) prévu à cet effet.

20. Installation d'adsorption par changement de pression selon la revendication 19,
**caractérisée en ce que**
une séparation de gaz (49) est prévue de telle sorte qu'un gaz pilote soit apte à être dérivé du flux à séparer du mélange de gaz pour piloter le déplacement.

21. Procédé d'adsorption par changement de pression, en particulier moyennant l'installation d'adsorption par changement de pression selon l'une des revendications précédentes, pour séparer un premier gaz d'un mélange de gaz, en particulier de l'azote (N₂), d'un deuxième gaz, en particulier de l'oxygène (O₂), comprenant les étapes :
a) introduction du mélange de gaz dans une chambre adsorbante (15, 16, 45) via une entrée de chambre adsorbante (27) sous une pression accrue de telle sorte que le deuxième gaz soit au moins en partie adsorbé, et
liaison d'une sortie de chambre adsorbante (28) à une première conduite d'évacuation de gaz (32) de telle sorte que la partie non adsorbée du mélange de gaz s'écoule via la première conduite d'évacuation de gaz (32), et
b) séparation de la sortie de chambre adsorbante (28) de la première conduite d'évacuation de gaz (32) et liaison de la sortie de chambre adsorbante (28) à une deuxième conduite d'évacuation de gaz (33), et réduction de la pression dans la chambre adsorbante (15, 16, 45) de telle sorte que du gaz adsorbé soit désorbé et s'écoule via la deuxième conduite d'évacuation de gaz (33), au moins une deuxième conduite d'évacuation de gaz (33) étant mobile en translation et/ou rotation de telle sorte qu'au moins deux sorties de chambre adsorbante (28) soient aptes à être raccordées en alternance à la deuxième conduite d'évacuation de gaz (33).

22. Procédé d'adsorption par changement de pression selon la revendication 21,
**caractérisé en ce que**
à l'étape a) et/ou b), la pression présente à l'entrée de chambre adsorbante (27) est réglée à 5 bars à 15 bars, de préférence 8 bars à 12 bars, en particulier 9 bars à 11 bars et/ou la pression à la sortie de chambre adsorbante (28) est réglée à l'étape a) à 4 bars à 10 bars, en particulier 5 bars à 8 bars, de préférence 6 bars à 7 bars et/ou la pression à la sortie de chambre adsorbante (28) est réglée à l'étape b) à 0,1 bar à 2 bars, en particulier environ 1 bar.

23. Procédé d'adsorption par changement de pression selon la revendication 21 ou 22,
**caractérisé en ce que**
un rapport d'un temps d'adsorption à l'étape a) à un temps de désorption à l'étape b) est environ d'au moins 1,5, de préférence d'au moins 2, plus préférentiellement d'au moins 5, en particulier d'au moins 10.

24. Procédé d'adsorption par changement de pression selon la revendication 21 à 23,
**caractérisé en ce que**
à un quelconque moment, un cycle d'adsorption est effectué pour un nombre n de chambres adsorbantes (15, 16, 45) et en même temps un cycle de désorption est effectué pour un nombre m, en particulier m=1, un rapport n/m étant d'au moins 1,5, de préférence d'au moins 2, en particulier d'au moins 10.

25. Procédé d'adsorption par changement de pression selon l'une des revendications 21 à 24,
**caractérisé en ce que**
au moins une chambre adsorbante (15, 16, 45) est déplacée en translation et/ou en rotation de telle sorte que, suite au déplacement, une sortie de chambre adsorbante (28) soit reliée en alternance à la première et à la deuxième conduite d'évacuation de gaz (32, 33).

26. Procédé d'adsorption par changement de pression selon l'une des revendications 21 à 25,
**caractérisé en ce que**
un déplacement des éléments de fermeture (29) et/ou des chambres adsorbantes (15, 16, 45) est piloté de façon pneumatique, en particulier au moyen d'au moins un vérin pneumatique (48) prévu à cet effet.

27. Procédé d'adsorption par changement de pression selon la revendication 26,
**caractérisé en ce que**
du flux à séparer du mélange de gaz, une partie est dérivée pour piloter le déplacement des éléments de fermeture (29).
